**Europäisches Patentamt**

**European Patent Office**

**Office européen des brevets**

(19)

(11) Veröffentlichungsnummer: **0 069 309**
**A1**

(12) # EUROPÄISCHE PATENTANMELDUNG

(21) Anmeldenummer: **82105691.8**

(22) Anmeldetag: **26.06.82**

(51) Int. Cl.³: **H 02 K 15/16**

(30) Priorität: **04.07.81 DE 3126530**

(43) Veröffentlichungstag der Anmeldung:
**12.01.83 Patentblatt 83/2**

(84) Benannte Vertragsstaaten:
**CH DE FR GB IT LI**

(71) Anmelder: **International Standard Electric Corporation**
**320 Park Avenue**
**New York New York 10022(US)**

(84) Benannte Vertragsstaaten:
**CH FR GB IT LI**

(71) Anmelder: **Standard Elektrik Lorenz Aktiengesellschaft**
**Hellmuth-Hirth-Strasse 42**
**D-7000 Stuttgart 40(DE)**

(84) Benannte Vertragsstaaten:
**DE**

(72) Erfinder: **Glasauer, Rudolf**
**Oberndorfer Strasse 28**
**D-8300 Landshut(DE)**

(74) Vertreter: **Pohl, Heribert Dipl.-Ing et al,**
**Standard Elektrik Lorenz AG Patent- und Lizenzwesen**
**Kurze Strasse 8 Postfach 300 929**
**D-7000 Stuttgart 30(DE)**

(54) **Kleinmotor und Verfahren zu seiner Herstellung.**

(57) Der Motor besitzt in einem Lagerschild (4) eine Bohrung so groß wie die Bohrung des Ständers, in der ein Lagerträger (7) angeordnet ist. Nach dem Befestigen der Lagerschilde am Ständer-Blechpaket (1) wird mit einem Werkzeug (17) der Kugellagersitz in einem Lagerschild und die Bohrung im anderen Lagerschild bearbeitet. Dadurch wird eine genaue Fluchtung der Lagersitze und ein genaues Lagerabstandsmaß erreicht.

Fig. 3

EP 0 069 309 A1

- 1 -

Kleinmotor und
Verfahren zu seiner Herstellung

Die Erfindung betrifft einen                    Kleinmotor mit
einem aus einem Blechpaket und einer Ständerwicklung bestehenden Ständer und einem in einer Ständerbohrung angeordneten, mittels Kugellagern in am Ständer befestigten Lagerschilden gelagerten Läufer sowie ein Verfahren zu seiner Herstellung.

Bei gehäuselosen Kleinmotoren, wie Spaltpol- oder Kondensatormotoren, sind die Läufer meist in Sinterlagern gelagert, weil diese eine hohe Lebensdauer gewährleisten,
geräuscharm sind und bezüglich ihrer geometrischen Anordnung eine unkritische Montage gestatten.

Es wäre wünschenswert, den Läufer auch bei diesen Motoren in Kugellagern zu lagern, jedoch stößt die Realisierung dieses Wunsches infolge technischer Schwierigkeiten und daraus resultierenden Kosten auf Schwierigkeiten. Eine der größten Schwierigkeiten besteht darin,
die Kugellager derart anzuordnen, daß die die Läuferwel-

ZT/P3-Bö/Gn

26.06.1981

- / -

R. Glasauer - 12

le aufnehmenden Kugellager genau fluchten. Außerdem ist es notwendig, für eine spielfreie Lagerung zu sorgen. Sind diese Voraussetzungen nicht erfüllt, tritt ein verstärktes und störendes Laufgeräusch auf. Außerdem ist ein frühzeitiger Lagerverschleiß und damit eine verkürzte Lebensdauer des Motors die Folge.

Es sind Motoren bekannt, bei denen versucht worden ist, die vorstehend erläuterten Schwierigkeiten dadurch zu beheben, daß durch Bearbeitung des Motor-Blechpaketes definierte Bezugsflächen geschaffen wurden oder zum Ausgleich Gummiteile zwischengeschaltet wurden. Es sind auch Motoren bekannt, bei denen die Lagersitze ursprünglich einen größeren Durchmesser besitzen und die Lager nach dem Zentrieren des Läufers im Ständer eingeklebt werden.

Diese Lösungen sind für die Großserienfertigung von Kleinmotoren wegen der damit verbundenen Kosten nicht brauchbar.

Der Erfindung liegt daher die Aufgabe zugrunde, einen .leinmotor zu schaffen, welcher derart gestaltet ist, daß die Lagerung des Läufers mittels Kugellagern mit einfachen Mitteln und damit kostengünstig zu verwirklichen ist. Außerdem soll ein Verfahren angegeben werden, mit dem die Herstellung des neuen Motors mit geringstem Aufwand gelingt.

Der neue Motor ist erfindungsgemäß dadurch gekennzeichnet, daß ein am unbearbeiteten Blechpaket befestigtes Lagerschild mit einer Bohrung versehen ist, die gleich oder grösser als die Ständerbohrung ist, in diese Bohrung ein mit

- 3 -

R. Glasauer - 12

einem Kugellagersitz versehener Lagerträger eingesetzt
und mit dem Lagerschild verbunden ist.

Die Herstellung des          Kleinmotors erfolgt erfindungsgemäß in der Weise, daß nach dem Befestigen der
Lagerschilde an dem Blechpaket mit einem in der Ständerbohrung geführten Fräswerkzeug gleichzeitig der Kugellagersitz in einem Lagerschild, der Sitz für den Lagerträger in der Bohrung und die Stirnseite des anderen
Lagerschildes hergestellt werden, danach der mit Kugellagern versehene Läufer in die Ständerbohrung eingeführt
und schließlich der Lagerträger unter gleichzeitiger
Aufnahme des Kugellagers in die Bohrung des Lagerschildes eingesetzt und am Lagerschild befestigt wird.

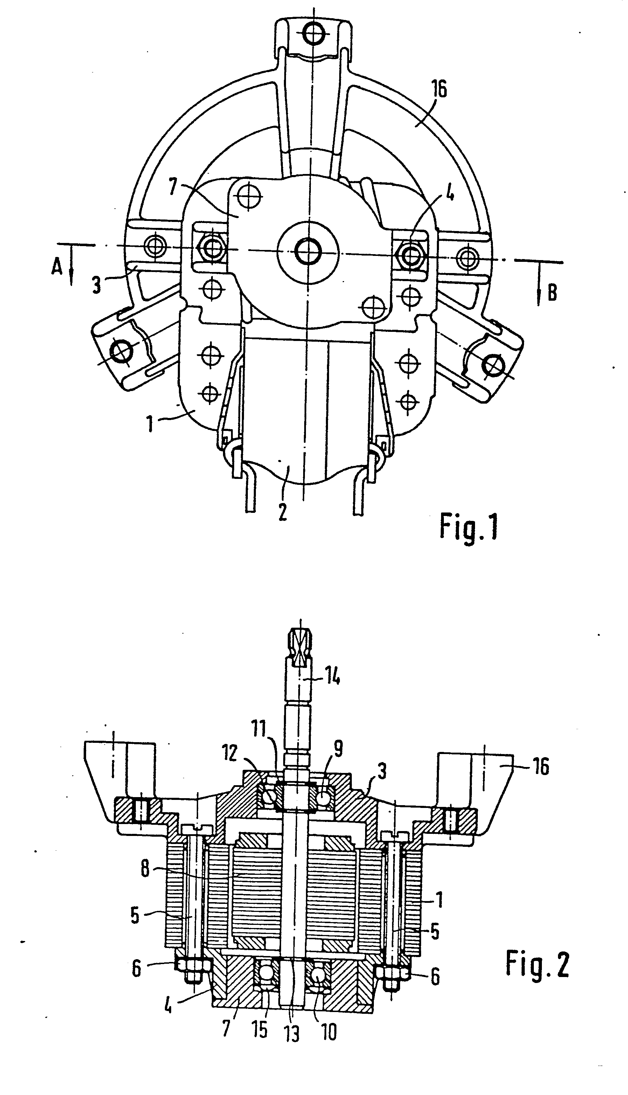

Die Erfindung ist nachstehend anhand der Figuren 1 bis
3 erläutert. Es zeigen:

Fig. 1    die Draufsicht auf die Rückseite eines
          Spaltpolmotors,

Fig. 2    einen Querschnitt entlang der Linie AB in
          Fig. 2 und

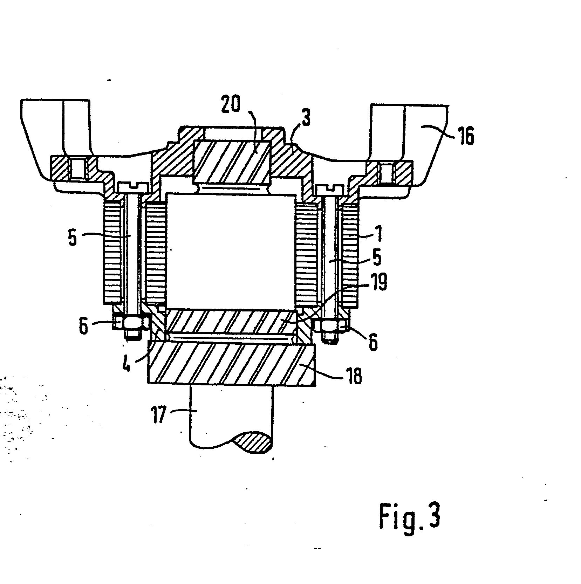

Fig. 3    die Verdeutlichung eines Zwischenschritts
          bei der Herstellung des Motors gemäß
          Fig. 1 und 2.

In den Figuren 1 und 2 ist ein Ausführungsbeispiel des
erfindungsgemäßen Motors gezeigt, und zwar zeigt Fig. 1
die Rückseite, d.h. die von der Abtriebswelle abgewandte
Seite, des Motors, der als Spaltpolmotor ausgebildet ist.
Aus Fig. 1 ist das Ständer-Blechpaket 1 erkennbar, auf dem
die Ständer-Wicklung 2 angeordnet ist. Oberhalb der Ständer-Wicklung 2 ist - in Fig. 1 nicht sichtbaren - Ständerbohrung der Läufer angeordnet, der in den Lagerschilden
3 und 4 drehbar gelagert ist. Wie besonders aus Fig. 1
deutlich zu erkennen, ist der Lagerschild 3 auf der Seite der Abtriebswelle einstückig mit einem Tragbügel 16
zur Befestigung des Motors an dem anzutreibenden Gerät
verbunden.

Fig. 2 verdeutlicht, daß die Lagerschilde 3 und 4 mittels
Schrauben 5 und Muttern 6 an dem aus einzelnen Dynamoblechen geschichteten, unbearbeiteten Blechpaket 1 befestigt sind. Der Läufer 8 mit der Läuferwelle 14 ist in
den Kugellagern 9 und 10 drehbar gelagert. Das Kugellager 9 ist in einem Lagersitz des Lagerschildes 3 angeordnet. Der Lagerschild 4 besitzt eine Bohrung, deren
Durchmesser etwas größer als die Bohrung im Ständer-Blechpaket 1 ist.        In diese Bohrung des Lagerschildes 4
ist der Lageträger 7 eingesetzt; in einem Lagersitz desselben  ist das Kugellager 10 angeordnet.

Für die Qualität des Motors ist es von ausschlaggebender
Bedeutung, daß die Abstände der Kugellager voneinander
ein genaues Maß aufweisen, und die Kugellager außerdem
genau fluchten.

Dieses Ziel wird im vorliegenden Fall durch die Konstruktion des Motors und das Herstellungsverfahren erreicht.

Vor der Montage des Motors ist der Lagersitz des Kugellagers 9 im Lagerschild 3 nur grob geformt. Das gleiche
gilt für die Bohrung im Lagerschild 4 und die Stirnfläche
des Lagerschildes 4.

R. Glasauer - 12

Nach dem Befestigen der Lagerschilde 3 und 4 an dem Ständer-Blechpaket 1 werden in einem Arbeitsgang und mit einem Werkzeug 17 die Lagerschilde 3 und 4 passend bearbeitet. Das Werkzeug 17 besteht aus dem Stirnfräser 18, dem Walzenfräser 19 und dem Walzenstirnfräser 26. Das Werkzeug 17 wird - wie aus Fig. 3 ersichtlich - von der Bohrung des Ständer-Blechpaketes 1 geführt. Der Walzenstirnfräser 20 formt den Kugellagersitz im Lagerschild 3, der Walzenfräser 19 formt den Sitz für den Lagerträger 7 in der Bohrung des Lagerschildes 4, während der Stirnfräser 18 diese Bohrung stirnseitig bearbeitet.

Der genaue Abstand zwischen den Lagersitzen ist durch den Abstand von Stirnfräser 18 und Walzenstirnfräser 20 vorgegeben. Das genaue Fluchten der später eingesetzten Lager ist auf das gleichzeitige Herstellen des Lagersitzes im Lagerschild 3 und der Bohrung im Lagerschild mittels eines einstückigen Werkzeuges zurückzuführen.

Nach dem vorstehend beschriebenen Bearbeiten wird der vormontierte Läufer 8 mit den beiden Kugellagern 9 und 10, welche durch Wellensicherungsringe 11, 12 und 13 lagegenau auf der Läuferwelle 14 fixiert sind, in das Ständer-Blechpaket 1 eingesetzt. Danach wird der Lagerträger 7 eingesetzt. Das Kugellager 10 wird nun durch den Lagerträger 7 genau zentriert gehalten. Durch die Anstellfeder 15 werden die beiden Kugellager 9 und 10 zur Geräuschverminderung spielfrei über den Außenring des Kugellagers 10 angestellt.

- 6 -

R. Glasauer - 12

Der Lagerträger 7 kann beispielsweise durch zwei selbstschneidende Schrauben an dem Lagerschild 4 befestigt
werden. Stattdessen ist auch eine Klebe- oder Preßverbindung denkbar. Der Lagerträger 7 kann spanlos
sehr maßgenau und preiswert hergestellt werden, beispielsweise im Sinter-, Spritz- oder Druckgußverfahren.
Die Anstellfeder 15 kann auch im abtriebsseitigen
Lagerschild 3 angeordnet sein.

- 1 -

Ansprüche

1.    Kleinmotor mit einem aus einem Blechpaket und einer Ständerwicklung bestehenden Ständer und einem in einer Ständerbohrung angeordneten, mittels Kugellagern in am Ständer befestigten Lagerschilden gelagerten Läufer, d a d u r c h   g e k e n n z e i c h n e t , daß ein am unbearbeiteten Blechpaket (1) befestigtes Lagerschild (4) mit einer Bohrung versehen ist, die gleich oder größer als die Ständerbohrung ist, in diese Bohrung ein mit einem Kugellagersitz versehener Lagerträger (7) eingesetzt und mit dem Lagerschild (4) verbunden ist.

2. Verfahren zur Herstellung eines Kleinmotors nach Anspruch 1, d a d u r c h   g e k e n n z e i c h n e t , daß nach dem Befestigen der Lagerschilde (3, 4) an dem Blechpaket (1) mit einem in der Ständerbohrung geführten Werkzeug (17) gleichzeitig der Kugellagersitz in einem Lagerschild (3), der Sitz für den Lagerträger (7) in der Bohrung und die Stirnseite des anderen

R. Glasauer - 12

Lagerschildes (4) hergestellt werden, danach der mit
Kugellagern (9, 10) versehene Läufer (8) in die Ständerbohrung eingeführt und schließlich der Lagerträger
(7) unter gleichzeitiger Aufnahme des Kugellagers (10)
in die Bohrung des Lagerschildes (4) eingesetzt und
am Lagerschild befestigt wird.

0069309

Fig.1

Fig.2

0069309

Fig.3

### Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 329 151 (BRADY) <br> * Seite 2, linke Spalte, Zeile 22 - Seite 3, linke Spalte, Zeile 8 * | 1,2 | H 02 K 15/16 |
| | --- | | |
| A | DE-A-2 263 546 (SKF) <br> * Seite 3, Zeile 10 - Seite 4, Zeile 8 * | 2 | |
| | --- | | |
| A | DE-B-1 202 893 (SCHUMANN) <br> * Spalte 4, Zeilen 7-30 * | 1,2 | |
| | ----- | | |

| | |
|---|---|
| | **RECHERCHIERTE SACHGEBIETE (Int. Cl. ³)** |
| | H 02 K |

Der vorliegende Recherchenbericht wurde für alle Patentansprüche erstellt.

| Recherchenort | Abschlußdatum der Recherche | Prüfer |
|---|---|---|
| DEN HAAG | 11-10-1982 | TANGOCCI A.R. |